# FASCICULE DE BREVET EUROPEEN

(11) **EP 1 468 911 B1**
(45) Date de publication et mention de la délivrance du brevet: **05.04.2006**
(21) Numéro de dépôt: 04290475.5
(22) Date de dépôt: 20.02.2004
(51) Int. Cl.: B64G 1/50

(54) **Satellite comportant des moyens de transfert thermique d'une étagère supportant des équipements vers des panneaux radiateurs**
Satellit einschliesslich Mittel zum Wärmetransport von einem Vorrichtungsgestell zu Radiatorpaneelen
Satellite comprising heat transport means from a shelf supporting equipment to radiator panels

(30) Priorité: 15.04.2003 FR 0304687
(43) Date de publication de la demande: 20.10.2004
(73) Titulaire: ALCATEL, 75008 Paris (FR)
(72) Inventeur: Tjiptahardja, Tisna, 06400 Cannes (FR); Amidieu, Marcel, 66300 Ponteilla (FR); Cluzet, Gérard, 06210 Mandelieu (FR)
(74) Mandataire: Smith, Bradford Lee

(56) Documents cités:
- EP-A- 0 776 827
- EP-A- 0 780 295
- EP-A- 0 780 301
- EP-A- 1 006 769
- US-A- 4 880 050
- US-A- 5 117 901
- US-A- 5 699 982
- US-A- 6 073 887

## Description

L'invention concerne un satellite, notamment de télécommunication, destiné à être placé sur une orbite géostationnaire, comprenant une structure ayant une face Nord et une face Sud orientées perpendiculairement à l'axe de rotation de la terre ainsi qu'une face Est et une face Ouest exposées périodiquement au rayonnement solaire pendant la rotation du satellite autour de la terre, cette structure supportant des équipements dégageant de la chaleur, les faces Nord, Sud, Est et Ouest constituant des panneaux radiateurs qui rayonnent dans l'espace la chaleur dégagée par les équipements.

Les satellites de télécommunication sont utilisés pour transmettre divers signaux (audio, vidéo, données, etc.) d'un point à un autre du globe. Ils embarquent une charge utile constituée principalement d'équipements électroniques qui dégagent de la chaleur excédentaire qu'il est nécessaire de rejeter par rayonnement dans le vide.

Il est classique d'utiliser les faces N/S comme panneaux radiateurs pour dissiper cette chaleur excédentaire parce que ces panneaux sont les plus froids. En effet, en raison de l'orbite équatoriale du satellite, l'énergie du soleil est minimale sur les faces N/S tandis que les quatre autres faces sont exposées directement au rayonnement solaire pendant une partie du cycle de rotation du satellite autour de la terre. Les panneaux N/S peuvent être couplés thermiquement pour diminuer les fluctuations de température et améliorer le rejet de la chaleur.

Cependant, comme on veut augmenter la charge utile des satellites de nouvelle génération, la capacité des panneaux N/S ne suffit plus. C'est pourquoi on a cherché à augmenter la capacité de rejet thermique.

Dans ce but, il a été proposé (US 6,073,887 Loral, Inc.) d'utiliser les faces E/O comme panneaux radiateurs complémentaires aux panneaux N/S. Comme ces derniers sont sujets à de fortes variations de rayonnement solaire durant un cycle de rotation du satellite autour de la terre, ce document enseigne de les coupler thermiquement par des caloducs pour atténuer l'amplitude des variations de température. L'amplitude des variations de température peut être réduite encore davantage par un apport de chaleur aux points les plus froids par un couplage simultané de quatre faces Est/Ouest/Terre/anti-Terre par l'intermédiaire de caloducs en boucle. Des équipements sont montés directement sur les faces Est et Ouest et éventuellement aussi sur les faces Terre et anti-Terre.

Dans un dispositif de ce type, la température des équipements dépend directement de la température des panneaux radiateurs auxquels ils sont accolés, ce qui impose de consacrer une partie plus ou moins importante de la capacité de rejet thermique du satellite au refroidissement des panneaux exposés au rayonnement solaire. La capacité de rejet disponible pour les équipements est donc diminuée. En outre, afin de réduire l'amplitude des variations de températures des équipements, il est nécessaire de réchauffer à certains instants les panneaux radiateurs, ce qui élève la température moyenne de fonctionnement des équipements.

La présente invention a pour objet un dispositif qui résout ces inconvénients. A cet effet, il comporte au moins une étagère qui supporte les équipements et des moyens de transfert thermique pour transférer la chaleur dégagée par les équipements vers les panneaux radiateurs Nord, Sud, Est et Ouest.

Dans un tel dispositif, les équipements ne sont pas accolés directement aux panneaux Nord, Sud, Est et Ouest. En conséquence, la température des faces exposées au rayonnement solaire peut s'élever sans que la température des équipements en soit automatiquement affectée. Les panneaux froids (les panneaux Nord et Sud, ainsi que le panneau opposé au panneau exposé au soleil) sont utilisés préférentiellement pour refroidir les équipements. La totalité de la capacité de rejet des panneaux radiatifs est ainsi utilisée pour refroidir les équipements.

De préférence, les moyens de transfert thermique sont constitués par au moins une boucle fluide diphasique à pompage capillaire.

Avantageusement, la boucle fluide comprend au moins un évaporateur, ayant une entrée et une sortie pour un fluide caloporteur, relié thermiquement aux équipements supportés par l'étagère, une branche de circulation du fluide caloporteur, ayant une extrémité raccordée à l'entrée et une extrémité raccordée à la sortie de l'évaporateur, associée à chacune des faces Nord, Sud, Est et Ouest ; chaque branche comprenant un condenseur du fluide caloporteur relié thermiquement à la face à laquelle la branche est associée.

Avec une telle boucle, les condenseurs sont montés en parallèle aux bornes du ou des évaporateurs. La vapeur se condense de manière efficace dans les condenseurs des branches les plus froides, très peu efficace dans la branche de la face la plus chaude (face au soleil) .

Avantageusement, chaque branche de circulation du fluide caloporteur comporte un isolateur placé à la sortie de son condenseur afin d'arrêter la progression de la vapeur non condensée.

En respectant quelques règles simples d'aménagement, le satellite muni de ce type de boucle fluide est testable au sol en essais vide-thermique quel que soit son positionnement.

Le satellite peut comporter une pluralité d'étagères, chaque étagère supportant des équipements, une boucle fluide étant prévue pour chaque étagère.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue générale en perspective d'un satellite de télécommunication ;
- la figure 2 est une vue schématique en perspective de la structure du satellite ;
- la figure 3 est une vue en perspective de la boucle fluide multi-évaporateurs multi-condenseurs ;
- la figure 4 est une vue de principe expliquant le fonctionnement d'une boucle fluide diphasique à pompage capillaire ;
- la figure 5 est une vue schématique rabattue de la boucle fluide de la figure 3 ;
- la figure 6 est une vue schématique en perspective d'un satellite conforme à l'invention comportant plusieurs étagères.

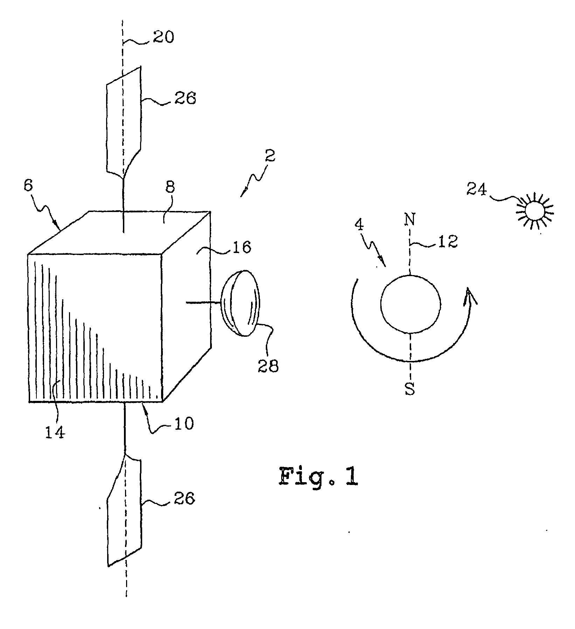

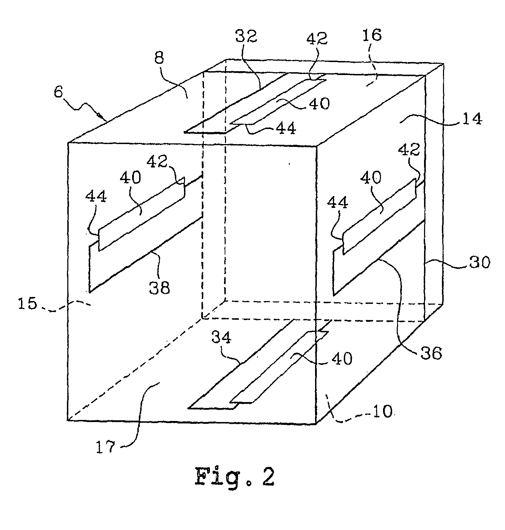

On a représenté sur la figure 1 un satellite de télécommunication 2 en orbite équatoriale géostationnaire autour de la terre 4. Le satellite dispose de moyens de contrôle de son attitude qui le maintiennent dans la position représentée. Le satellite comporte une structure 6 parallélépipédique à six faces à savoir respectivement des faces Nord 8 et Sud 10 perpendiculaires à l'axe de rotation 12 de la terre, une face Est 14 et une face Ouest 15 (visible sur la figure 2), une face Terre 16 et une face anti-Terre 17 (visible sur la figure 2). Un axe Nord-Sud 20 passant par le centre de la structure 6 et perpendiculaire aux faces Nord et Sud est maintenu parallèle à l'axe de rotation de la terre. Le soleil, situé à grande distance, est désigné par la référence 24. On a également représenté des panneaux solaires 26 disposés perpendiculairement aux faces Nord 8 et Sud 10 pour alimenter le satellite en énergie électrique, ainsi qu'une antenne de télécommunication 28 pointée vers la terre.

On a représenté sur la figure 2 une vue en perspective de la structure 6 du satellite de la figure 1. On note la présence d'une étagère 30 dans le volume délimité par les six faces 8, 10, 14, 15, 16 et 17. Dans la réalisation représentée, l'étagère est disposée parallèlement à la face Terre 16. Toutefois, d'autres dispositions de l'étagère peuvent être envisagées sans sortir du cadre de l'invention. L'étagère supporte des équipements, généralement des équipements électroniques (non représentés), qui dégagent une chaleur excédentaire qu'il est nécessaire de rejeter dans l'espace. A cet effet, la structure du satellite comporte des moyens permettant de transférer la chaleur excédentaire des équipements vers les quatre faces Nord, Sud, Est et Ouest. Ces moyens sont avantageusement constitués par une boucle fluide qui comprend un ou plusieurs évaporateurs, qui seront décrits ultérieurement, en contact thermique avec l'étagère 30 et au moins un condenseur 40 en contact avec chacune des faces Nord, Sud, Est et Ouest. Les condenseurs 40 font partie de quatre branches 32, 34, 36 et 38 de la boucle fluide associées respectivement aux faces Nord, Sud, Est et Ouest. Ils comportent une entrée 42 et une sortie 44 pour un fluide caloporteur.

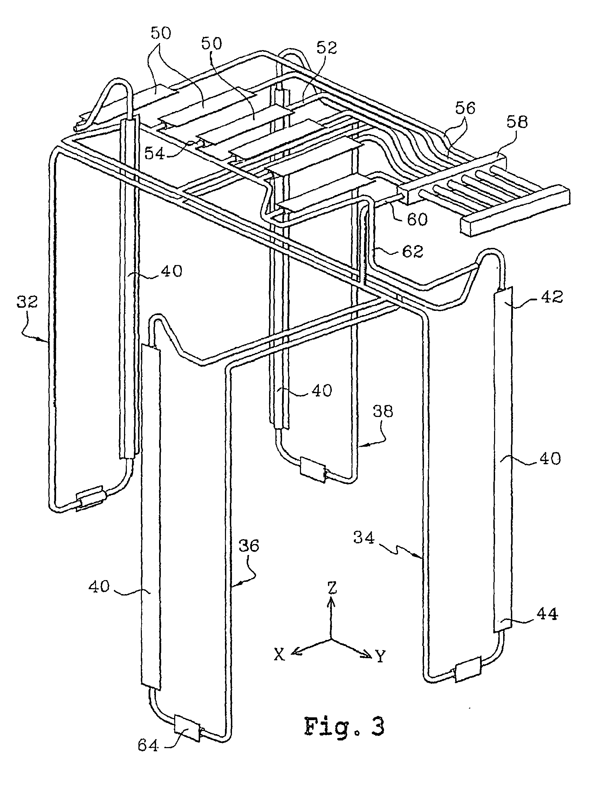

On a représenté sur la figure 3 une vue en perspective d'une réalisation particulière de la boucle fluide. Elle comprend plusieurs évaporateurs 50 (six dans l'exemple représenté) en contact thermique avec l'étagère 30 (non représentée) et donc avec les équipements. Les évaporateurs 50 comportent une entrée 52 et une sortie 54 pour le fluide caloporteur. Les entrées 52 sont reliées à des canalisations 56 raccordées à un réservoir 58. Le réservoir est alimenté en fluide par une canalisation d'arrivée 60. Les sorties 54 sont reliées à une canalisation 62 reliée à l'entrée 42 de chacun des condenseurs 40.

Un isolateur 64 est placé à la sortie 44 de chaque condenseur 40 pour arrêter la progression de la vapeur non encore pleinement condensée. Le fonctionnement du dispositif est tel que la vapeur générée au niveau des évaporateurs se condense préférentiellement dans les branches les plus froides. De cette manière, on réalise un couplage thermique des quatre panneaux radiateurs Nord, Sud, Est et Ouest, ce qui atténue leur gradient thermique.

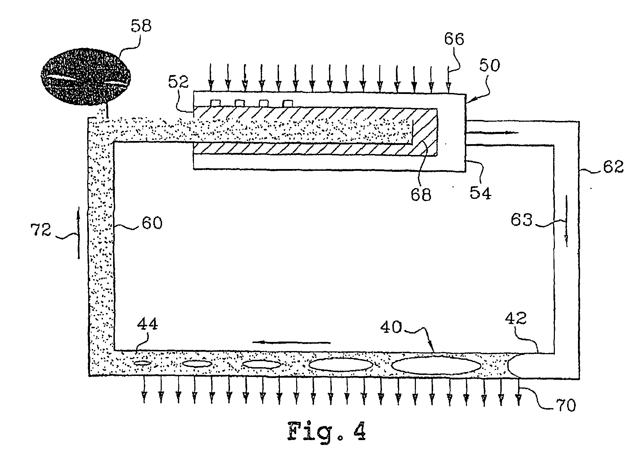

La figure 4 est une vue schématique qui illustre le fonctionnement d'une boucle diphasique à pompage capillaire. Une charge thermique schématisée par les flèches 66 est appliquée sur l'évaporateur 50. Elle est engendrée, dans le cas de l'invention, par les équipements à refroidir. La chaleur dégagée par ces équipements provoque la vaporisation du fluide à l'état liquide contenu dans le capillaire 68. La vapeur produite sort de l'évaporateur par la ligne de vapeur 62 et parvient au condenseur 40 (flèche 63). En se condensant, elle cède sa chaleur au panneau radiateur auquel le condenseur est accolé, comme schématisé par les flèches 68 provoquant la condensation du fluide qui retourne à l'état liquide. Le panneau radiateur rayonne la chaleur reçue dans l'espace. Le fluide revient à l'évaporateur par la ligne liquide 60 (flèche 72). Le réservoir 58 situé à l'entrée de l'évaporateur assure en permanence l'alimentation de l'évaporateur l'alimentation de l'évaporateur en liquide afin d'empêcher que la boucle ne se désamorce.

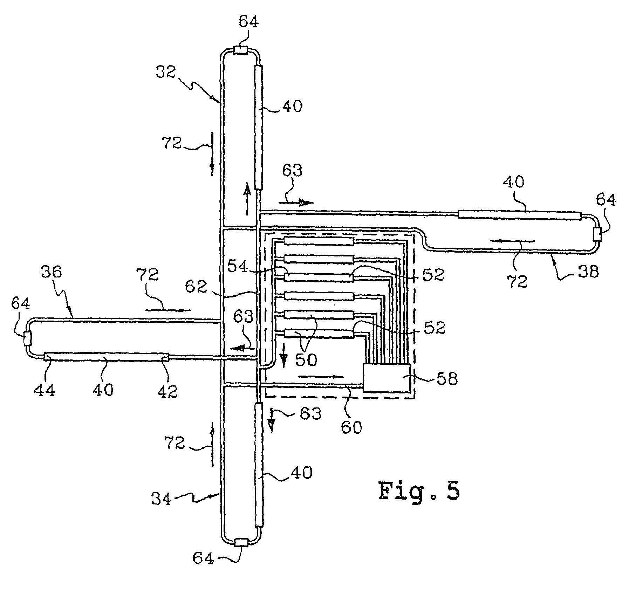

Le fonctionnement de la boucle fluide représentée sur les figures 3 et 5 est basé sur celui de la bouche fluide de la figure 4. Toutefois elle comporte six évaporateurs afin de collecter les dissipations de six équipements dispersés sur l'étagère. En outre elle comporte une branche comportant un condenseur pour chacun des panneaux radiateurs. Etant donné qu'il y a quatre panneaux radiateurs (Nord, Sud, Est et Ouest), il y a quatre branches respectivement 32, 34, 36 et 38. Ces branches sont montées en parallèle aux extrémités 52 et 54 des évaporateurs 50.

Selon une caractéristique avantageuse de l'invention, la vapeur produite globalement par les évaporateurs 50 n'est pas répartie également entre les condenseurs. Elle se condense de manière efficace uniquement sur les points les plus froids et peu efficace sur le point chaud. De cette manière un couplage thermique simultané des quatre panneaux radiateurs est assuré, atténuant ainsi leurs gradients thermiques. Ainsi, à chaque instant du cycle de rotation du satellite autour de la terre, ce sont toujours les faces les plus froides qui sont utilisées pour refroidir les équipements.

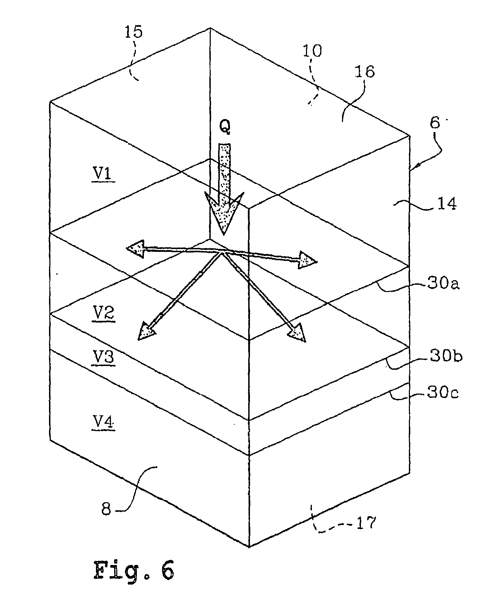

On a représenté sur la figure 6 une variante de réalisation de l'invention qui comporte une pluralité d'étagères. Dans cette variante, les étagères sont au nombre de trois (30a, 30b et 30 c). Chaque étagère supporte des équipements. Une boucle fluide distincte est prévue pour chaque étagère. Le volume interne de la structure 6 est ainsi divisé en quatre sous-volumes V1, V2, V3 et V4 pouvant fonctionner à des températures différentes.

## Revendications

1. Satellite, notamment de télécommunication, destiné à être placé sur une orbite géostationnaire, comprenant une structure (6) ayant une face Nord (8) et une face Sud (10) orientées perpendiculairement à l'axe de rotation (12) de la terre ainsi qu'une face Est (14) et une face Ouest (15) exposées périodiquement au rayonnement solaire pendant la rotation du satellite autour de la terre, cette structure (6) supportant des équipements dégageant de la chaleur, les faces Nord, Sud, Est et Ouest (8, 10, 14, 15) constituant des panneaux radiateurs qui rayonnent dans l'espace la chaleur dégagée par les équipements, **caractérisé en ce qu'**il comporte au moins une étagère (30) qui supporte les équipements et des moyens de transfert thermique pour transférer la chaleur dégagée par les équipements vers les panneaux radiateurs Nord, Sud, Est et Ouest (8, 10, 14, 15).

2. Satellite selon la revendication 1, **caractérisé en ce que** les moyens de transfert thermique sont constitués par au moins une boucle fluide diphasique à pompage capillaire.

3. Satellite selon l'une des revendications 1 ou 2, **caractérisé en ce que** la boucle fluide comprend au moins un évaporateur (50), ayant une entrée et une sortie pour un fluide caloporteur, relié thermiquement aux équipements supportés par l'étagère (30), une branche de circulation du fluide caloporteur (32, 34, 36, 38), ayant une extrémité raccordée à l'entrée et une extrémité raccordée à la sortie de l'évaporateur (50), associée à chacune des faces Nord, Sud, Est et Ouest (8, 10, 14, 15) ; chaque branche comprenant un condenseur (40) du fluide caloporteur relié thermiquement à la face à laquelle la branche est associée.

4. Satellite selon la revendication 3, **caractérisé en ce que** chaque branche de circulation du fluide caloporteur comporte un isolateur (64) placé à la sortie de son condenseur (40) afin d'arrêter la vapeur non condensée.

5. Satellite selon l'une des revendications 1 à 4, **caractérisé en ce que** l'étagère (30) est disposée parallèlement à une face de la structure (6) faisant face à la terre.

6. Satellite selon l'une des revendications 1 à 5, **caractérisé en ce qu'**il comporte une pluralité d'étagères (30a, 30b, 30c), chaque étagère supportant des équipements, une boucle fluide étant prévue pour chaque étagère.

## Patentansprüche

1. Satellit, insbesondere Telekommunikationssatellit, der auf einer geostationären Umlaufbahn platziert werden soll, einschließlich einer Struktur (6), die eine Nord- (8) und eine Südseite (10) hat, die senkrecht zur Umdrehungsachse (12) der Erde ausgerichtet ist, sowie eine Ost- (14) und eine Westseite (15), die während des Umlaufs des Satelliten um die Erde in regelmäßigen Abständen der Sonnenstrahlung ausgesetzt sind, wobei diese Struktur (6) Vorrichtungen trägt, die Wärme freisetzen, und die Nord-, Süd-, Ost- und Westseite (8, 10, 14, 15) Radiatorpaneele bilden, welche die von den Vorrichtungen freigesetzte Wärme in den Weltraum abstrahlen, **dadurch gekennzeichnet, dass** er mindestens ein Vorrichtungsgestell (30) und Mittel zum Wärmetransport beinhaltet, um die von den Vorrichtungen freigesetzte Wärme zu den Nord-, Süd-, West- und Ost-Radiatorpaneelen (8, 10, 14, 15) zu transportieren.

2. Satellit gemäß Anspruch 1, **dadurch gekennzeichnet, dass** die Mittel zum Wärmetransport aus mindestens einer Zweiphasen-Flüssigkeitsschleife mit Kapillaraszension bestehen.

3. Satellit gemäß einem der Ansprüche 1 oder 2, **dadurch gekennzeichnet, dass** die Flüssigkeitsschleife mindestens einen Verdampfer (50) beinhaltet, der einen Eingang und einen Ausgang für ein Kühlmittel hat, welcher thermisch mit den Vorrichtungen des Vorrichtungsgestells (30) verbunden ist, einen Zirkulationsstrang des Kühlmittels (32, 34, 36, 38), der ein an den Eingang und ein an den Ausgang des Verdampfers (50) angeschlossenes Ende hat, jeweils mit der Nord-, Süd-, Ost- und Westseite (8, 10, 14, 15) verknüpft; jeder Strang beinhaltet einen Kondensator (40) des Kühlmittels, der thermisch mit der Seite verbunden ist, mit der der Strang verknüpft ist.

4. Satellit gemäß Anspruch 3, **dadurch gekennzeichnet, dass** jeder Zirkulationsstrang des Kühlmittels einen am Ausgang seines Kondensators (40) angebrachten Isolator (64) beinhaltet, um den nicht kondensierten Dampf zu stoppen.

5. Satellit gemäß einem der Ansprüche 1 bis 4, **dadurch gekennzeichnet, dass** das Gestell (30) parallel zu einer Seite der Struktur (6) angeordnet ist, welche der Erde gegenüberliegt.

6. Satellit gemäß einem der Ansprüche 1 bis 5, **dadurch gekennzeichnet, dass** er eine Vielzahl von Gestellen (30a, 30b, 30c) beinhaltet, wobei jedes Gestell Vorrichtungen trägt und für jedes Gestell eine Flüssigkeitsschleife vorgesehen ist.

## Claims

1. A satellite, in particular a telecommunication satellite, intended to be placed in a geostationary orbit, and comprising a structure (6) having a north face (8) and a south face (10) oriented perpendicularly to the rotation axis (12) of the Earth and an east face (14) and a west face (15) that are periodically exposed to solar radiation as the satellite orbits the Earth, said structure (6) supporting equipment dissipating heat, the north, south, east and west faces (8, 10, 14, 15) constituting radiator panels that radiate into space heat dissipated by the equipment, **characterized in that** it comprises at least one shelf (30) to support the equipment and heat transfer means for transferring heat dissipated by the equipment to the north, south, east and west radiator panels (8, 10, 14, 15).

2. A satellite according to claim 1, **characterized in that** the heat transfer means comprise at least one capillary pumped two-phase fluid loop.

3. A satellite according to either of claims 1 and 2, **characterized in that** the fluid loop comprises at least one evaporator (50) having an inlet and an outlet for a heat exchange fluid thermally connected to the equipment supported by the shelf (30), and a heat exchange fluid circulation branch (32, 34, 36, 38) having one end connected to the inlet and one end connected to the outlet of the evaporator (50) associated with each of the north, south, east and west faces (8, 10, 14, 15), each branch comprising a heat exchange fluid condenser (40) thermally connected to the face with which the branch is associated.

4. A satellite according to claim 3, **characterized in that** each heat exchange fluid circulation branch comprises an isolator (64) at the outlet of its condenser (40) to block uncondensed vapor.

5. A satellite according to any of claims 1 to 4, **characterized in that** the shelf (30) is parallel to a face of the structure (6) facing the Earth.

6. A satellite according to any of claims 1 to 5, **characterized in that** it comprises a plurality of shelves (30a, 30b, 30c) for supporting equipment and a fluid loop for each shelf.
